# EUROPÄISCHE PATENTSCHRIFT

(11) **EP 1 763 424 B1**
(45) Veröffentlichungstag und Bekanntmachung des Hinweises auf die Patenterteilung: **15.08.2007**
(21) Anmeldenummer: 05715564.0
(22) Anmeldetag: 25.02.2005
(51) Int. Cl.: B29C 43/24, B29C 47/88

(54) **VERFAHREN UND VORRICHTUNG ZUM BETREIBEN EINES WALZENGLÄTTWERKES FÜR KUNSTSTOFFSCHMELZEN**
METHOD FOR OPERATING A CALENDAR MACHINE FOR PLASTIC MELTS
PROCEDE POUR FAIRE FONCTIONNER UNE MACHINE DE POLISSAGE A CYLINDRES POUR DES PLASTIQUES EN FUSION

(30) Priorität: 08.07.2004 DE 102004033234
(43) Veröffentlichungstag der Anmeldung: 21.03.2007
(73) Patentinhaber: Breyer GmbH Maschinenfabrik, 78224 Singen (DE)
(72) Erfinder: LUCAS, Bernhard, 78224 Singen-Bohlingen (DE); RIEDLE, Reiner, 78315 Radolfzell (DE); ZIEGLER, Uwe, 78267 Aach (DE); BRÜTSCH, Martin, 78262 Gailingen (DE)
(74) Vertreter: Weiss, Peter
(86) Internationale Anmeldenummer: PCT/EP2005/002030
(87) Internationale Veröffentlichungsnummer: WO 2006/005378

(56) Entgegenhaltungen:
- DE-C- 226 787
- DE-U- 1 982 080
- US-A- 4 408 974
- US-A- 4 784 596
- US-B1- 6 187 422
- PATENT ABSTRACTS OF JAPAN Bd. 013, Nr. 214 (M-827), 18. Mai 1989 (1989-05-18) -& JP 01 031609 A (ISHIKAWAJIMA HARIMA HEAVY IND CO LTD), 1. Februar 1989 (1989-02-01)

## Beschreibung

Die vorliegende Erfindung betrifft ein Verfahren zum Betreiben eines Walzenglättwerkes für Kunststoffschmelzen mit einer nachgeschalteten Rollbahn sowie eine Vorrichtung zum Durchführen des Verfahrens.

Bei herkömmlichen Verfahren wird unterhalb des herkömmlichen Walzenglättwerkes bei der Bearbeitung von Kunststoffschmelzen eine Rollbahn zum Austragen von fertiggestellten Kunststoffplatten od. dgl. fest gegenüber einer letzten Walze eines Walzenglättwerkes positioniert und ihr gegenüber fest ausgerichtet.

Nachteilig hierdurch ist, dass keine Einstellung eines Ablösepunktes der fertiggestellten Platte der von der letzten Walze des Walzenglättwerkes zur ersten Walze der Rollbahn einstellbar ist bzw. möglich ist, und sich hierdurch im Betrieb Verzögerungen, ein höherer Materialverschleiss einstellen und ein manueller Eingriff oftmals erforderlich ist, um das Produkt, welches die letzte Walze des Walzenglättwerkes verlässt der Rollbahn zu übergeben.

Auch ist nachteilig, dass insbesondere bei Crash, die Schmelze auf die Rollbahn stösst, was ebenfalls unerwünscht ist.

Die US 4,784,596 beschreibt eine Kalanderanlage für die Herstellung von thermoplastischen Kunststoffen, bei welcher einem Glättwerk eine auf einem Wagen bewegbare Prägeeinrichtung mit drei Walzen nachgeschaltet ist. Die Prägeeinrichtung ist über den Wagen horizontal bewegbar.

Der Patent Abstract of Japan, Bd. 013, Nr. 214, 18. Mai 1989 & JP 01 031609 A offenbart ein Glättwerk, welchem Streckwerk nachgeschaltet ist. Dabei ist das Streckwerk auf unterschiedliche Walzen des Glättwerkes vertikal verfahrbar.

Die US 4,408,974 offenbart ein dem Glättwerk nachgeschaltetes Streckwerk, welches horizontal auf einem Wagen verfahrbar ist. Zum Einführen der zu streckenden Bahn sind einzelne Walzen in der Höhe verstellbar.

Die DE 19 82 080 U beschreibt ebenfalls einen Kalander mit nachgeschaltetem Streckwerk, welches auf einem Wagen horizontal verfahrbar ist.

Der vorliegenden Erfindung liegt daher die Aufgabe zugrunde, ein Verfahren sowie eine Vorrichtung zum Durchführen des Verfahrens zu schaffen, mit welchen auf kostengünstige und einfache Weise permanent im Betrieb material-, dicken-, oder temperaturunabhängig einem Produktionsablauf zum Bearbeiten von Kunststoffschmelzen mit Walzenglättwerken und Rollbahnen zu optimieren, ohne dass ein manueller Eingriff notwendig ist, und dennoch eine Vielfalt von unterschiedlich dicken Produkten bzw. Platten hergestellt werden können. Ferner soll die Betriebssicherheit erhöht werden, die Produktionsgeschwindigkeit soll gesteigert werden, wobei auch die Qualität des hergestellten Produktes erheblich verbessert werden soll.

Zur Lösung dieser Aufgabe führen die Merkmale der Kennzeichen der Patentansprüche 1 und 9.

Bei der vorliegenden Erfindung hat sich als besonders vorteilhaft erwiesen, eine Rollbahn gegenüber einer letzten Walze eines beliebigen Walzenglättwerkes in einer x- und/oder y-Richtung im Betrieb gesteuert und ansteuerbar zu verfahren, um eine Position der ersten Walze einer Rollbahn, gegenüber einer letzten Walze des Walzenglättwerkes permanent auszurichten, ein Abstand anzupassen, ein Abstand zu justieren sowie feineinzustellen. Dies kann für unterschiedliche Prozesse in Betrieb, d. h. für den Anfahrprozess, für den Zustellprozess der Walzen des Walzenglättwerkes sowie für den Produktionsprozess von Vorteil sein.

Auch bei sich ändernden Parametern, wie sich ändernder Dicke, sich ändernden Austrittstemperaturen hat es sich als besonders vorteilhaft erwiesen, permanent im Betrieb einen Abstand einer ersten Walze der Rollbahn zur letzten Walze des Walzenglättwerkes zu verändern bzw. einzustellen.

Dabei ist unter der ersten Walze der Rollbahn diejenige Walze zu verstehen, auf welche die im Walzenglättwerk bearbeitete Kunststoffschmelze bspw. zur Kunststoffplatte trifft.

Hierzu kann die Rollbahn über beliebige Antriebsmittel, Antriebszylinder, Hydraulikzylinder, Servomotoren, Linearmotoren od. dgl. in einer x- und/oder y-Richtung permanent im Betrieb verfahren werden. Zum einen ist daran gedacht, die Rollbahn gegenüber einem Gestell in einer dargestellten x- und/oder y-Richtung aktiv angesteuert zu verfahren, um einen Abstand einer ersten Walze der Rollbahn gegenüber einer letzten Walze eines beliebigen Walzenglättwerkes einzustellen.

Auch können entweder dem Walzenglättwerk und/oder der Rollbahn vorzugsweise nahe der letzten Walze des Walzenglättwerkes bzw. vorzugsweise nahe der ersten Walze der Rollbahn entsprechende Abstandsmesseinrichtungen vorgesehen sein, die permanent zusätzlich zu den ermittelten Positionen der Rollbahn in x- und/oder y-Richtung, einen Abstand zwischen den beiden Walzen messen, nachregeln, bzw. überprüfen. Dies soll ebenfalls im Rahmen der vorliegenden Erfindung liegen.

Es hat sich daher als besonders vorteilhaft erwiesen, dass insbesondere ein Anfahren eines Produktionsprozesses, bei welchem eine Kunststoffschmelze, aus einem Extruder über eine Breitschlitzdüse dem Walzenglättwerk zugeführt und durch das Walzenglättwerk geführt wird, erleichtert ist. Dabei ist beim Austragen der bearbeiteten Kunststoffschmelze aus der letzten Walze des Walzenglättwerkes eine Übergabe auf eine erste Walze einer Rollbahn wesentlich erleichtert, da der Ablösepunkt von der fertiggestellten Platte zur ersten Walze der Rollbahn durch Verfahren der Rollbahn exakt eingestellt werden kann. Ein manuelles Eingreifen ist nicht mehr erforderlich; ein Anfahrprozess kann automatisch erfolgen.

Zudem kann dann im Anfahrprozess, insbesondere im Zustellprozess des Walzenglättwerkes, um eine entsprechend gefordert gewünschte Dicke der Kunststoffplatten einzustellen, auch permanent im Betrieb die erste Walze der Rollbahn in oben beschriebender Weise gegenüber der letzten Walz des Glättwerkes, die sich auch bewegt, mitverfahren werden. Hierdurch lassen sich ebenfalls höhere Produktions- bzw. Anfahrgeschwindigkeiten fahren, wobei die Qualität des Produktes erhalten bleibt.

Zudem wird gewährleistet, dass bei einem Crash die Rollbahn gegenüber einem Untergrund sehr schnell mit einer sehr hohen Geschwindigkeit abgesenkt werden kann, so dass keine Schmelze die Rollbahn beaufschlagt oder auch die Walzen des Walzenglättwerkes beschädigt.

Eine grössere Öffnungsgeschwindigkeit der Rollbahn gegenüber dem Walzenglättwerk, insbesondere der letzten Walze des Walzenglättwerkes ermöglicht, auch bei "Notaus" ein schnelles Anhalten, ohne jegliche Beschädigungen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a eine schematisch dargestellte Seitenansicht auf eine erfindungsgemässe Vorrichtung zum Betreiben eines Walzenglättwerkes für Kunststoffschmelzen mit einer nachgeschalteten Rollbahn in einer Startposition;
Figur 1b eine schematisch dargestellte Seitenansicht auf die Vorrichtung gemäss Figur 1a in einer Arbeitsposition;
Figur 1c eine schematisch dargestellte Seitenansicht auf die Vorrichtung gemäss Figur 1a in Produktion;
Figur 2a eine schematisch dargestellte Seitenansicht eines weiteren Ausführungsbeispieles einer Vorrichtung zum Betreiben eines walzenglättwerkes für Kunststoffschmelzen mit einer nachgeschalteten Rollbahn in einer Startposition;
Figur 2b eine schematisch dargestellte Seitenansicht der Vorrichtung gemäss Figur 2a in einer Startposition;
Figur 2c eine schematisch dargestellte Seitenansicht der Vorrichtung gemäss Figur 2a in Produktion;
Figur 2d eine schematisch dargestellte Seitenansicht der Vorrichtung mit abgesenkter Rollbahn im Not- oder Wartungsbetrieb.

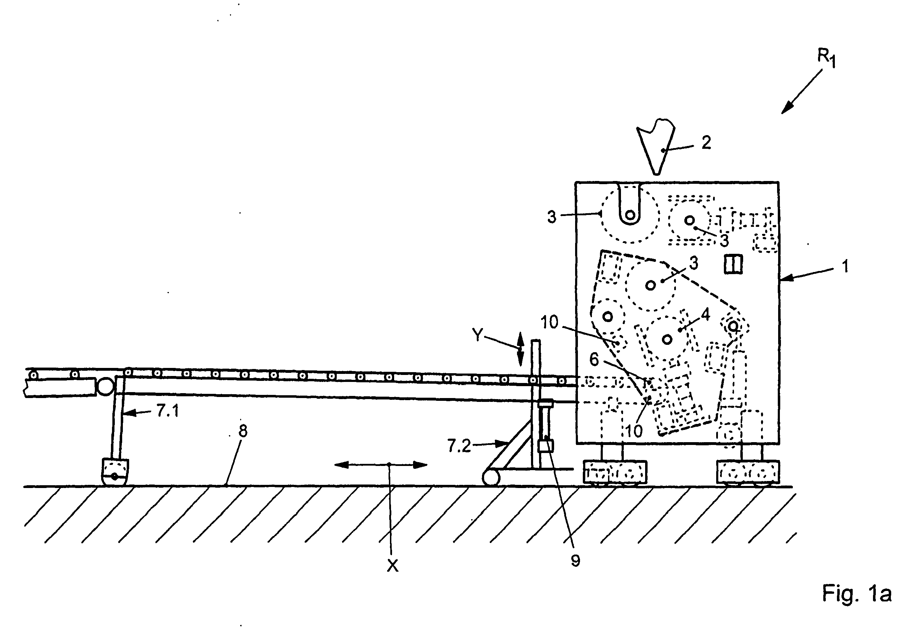

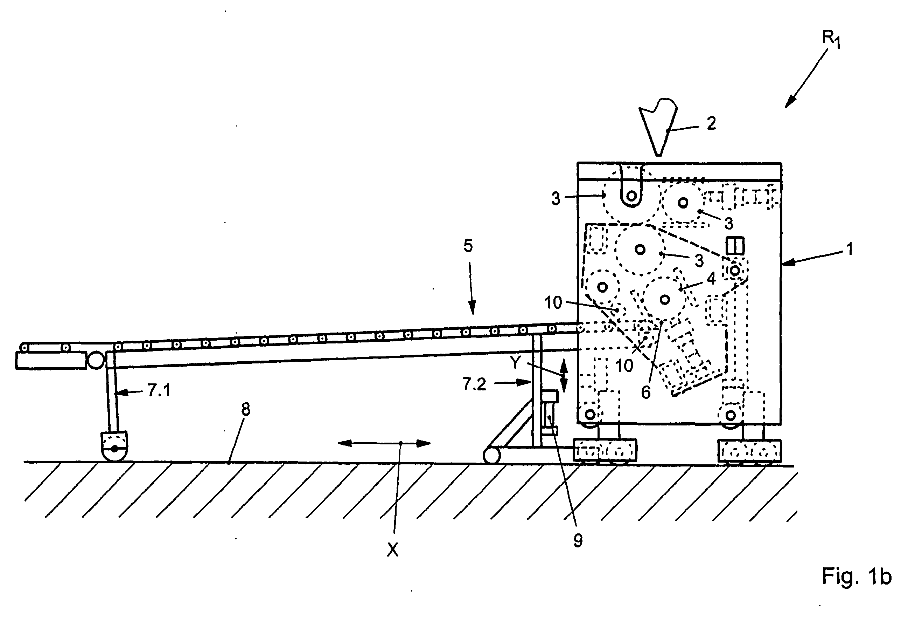

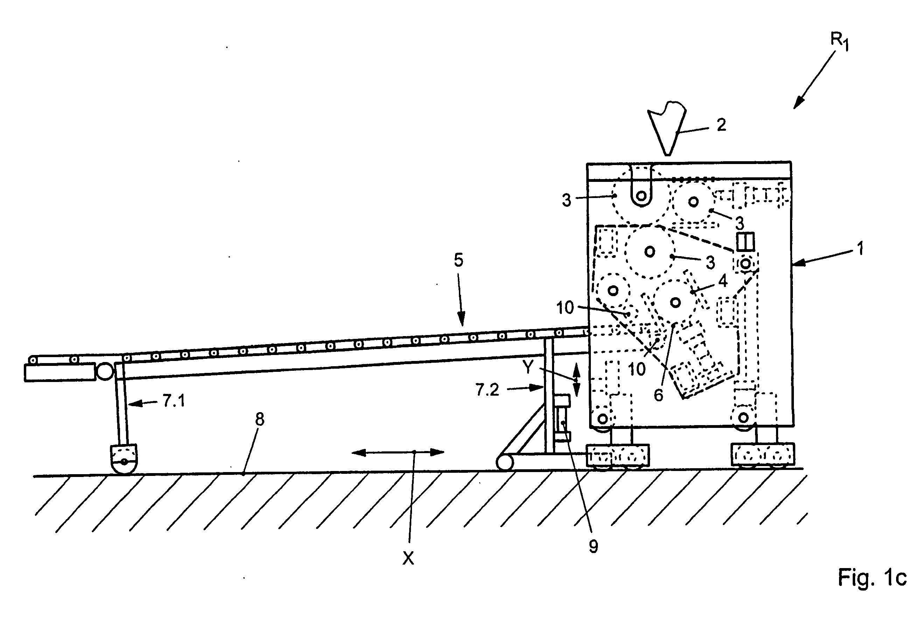

Gemäss Figur 1a weist eine erfindungsgemässe Vorrichtung R₁ ein Walzenglättwerk 1 auf, in welches eine Breitschlitzdüse 2 eine extrudierte Kunststoffschmelze zwischen die einzelnen Walzen 3 des Walzenglättwerkes 1 einbringt, im Walzenglättwerk 1 auf eine gewünschte Dicke gebracht wird und gleichzeitig über die Walzen 3 und dessen letzte Walze 4 gekühlt wird. An der letzten Walze 4 des Walzenglättwerkes 1 gelangt dann die fertiggestellte Kunststoffplatte, Folie od. dgl. auf eine Rollbahn 5 bzw. wird, wie es in den Figuren 1b und 1c ersichtlich ist, von der letzten Walze 4 des Walzenglättwerkes 1 auf eine erste Walze 6 der Rollbahn 5 übertragen, um dann bspw. die hergestellten Produkte auf der Rollbahn 5 vollständig abzukühlen, zu vergleichmässigen und dann einer weiteren Bearbeitung, wie bspw. eine Ablängeinrichtung, Aufrolleinrichtung od. dgl. zuzuführen.

Bei der vorliegenden Erfindung kann das Walzenglättwerk 1 wie es dargestellt ist, als Vierwalzenglättwerk, jedoch auch als Dreiwalz- oder anders ausgeformtes Walzenglättwerke ausgebildet sein. Wichtig ist lediglich, dass die letzte Walze 4 eines beliebigen Walzenglättwerkes 1 die umgeformte Kunststoffschmelze der Rollbahn 5, insbesondere einer ersten Walze 6 übergibt.

Ferner hat sich bei der vorliegenden Erfindung als besonders vorteilhaft erwiesen, dass die Rollbahn über zumindest ein Gestell 7.1, 7.2 in einer dargestellten x-Richtung hin und her verfahrbar ist, wobei das Gestell 7 gegenüber einem Untergrund 8 gelagert oder sogar linear geführt ist.

Über entsprechend hier nicht näher dargestellte Antriebselemente 9 oder Antriebsmittel lässt sich die Rollbahn 5 exakt und sehr genau in dargestellter Doppelpfeilrichtung x hin und her bewegen.

Dabei ist dem Gestell 7.2, welches vorzugsweise nahe des Walzenglättwerkes 1 ausgerichtet und angeordnet ist, ein zusätzliches Antriebselement 9 zugeordnet, um die Rollbahn 5 in einer dargestellten y-Richtung hin und her zu verfahren.

Dabei steht die Rollbahn 5, insbesondere die Gestelle 7.1 oder 7.2 mit einem Wegmesssystem in Verbindung, um eine exakte Position in x- oder y-Richtung permanent, auch im Betrieb, zu ermitteln.

Hierdurch lässt sich bei der vorliegenden Erfindung vorzugsweise die erste Walze 6 der Rollbahn 5 gegenüber der letzten Walze 4 des Walzenglättwerkes 1 exakt positionieren, so dass, wie es bspw. in Figur 1a dargestellt ist, eine Übergabe des verformten Kunststoffes bzw. der im Walzenglättwerk 1 behandelten Kunststoffschmelze ohne zusätzlichen manuellen Arbeitsaufwand oder Einsatz erfolgt.

In dem Ausführungsbeispiel gemäss Figur 1b ist dann dargestellt, wie die Rollbahn 5, insbesondere die erste Walz 6, nahe unterhalb der letzten Walze 4 des Walzenglättwerkes 1 angefahren ist.

In Figur 1c ist dargestellt, wie das Walzenglättwerk 4 geschlossen ist und permanent im Betrieb die Kunststoffschmelze bearbeitet und der Rollbahn 5 endlos übergibt.

Dabei wird permanent im Betrieb ein Abstand der ersten Walze 6 der Rollbahn 5 zur Walze 4 abgeglichen und gemessen wobei auch entsprechende hier nur angedeutete Abstandsmesseinrichtungen 10, die dem Walzenglättwerk 1 und/oder der Rollbahn 5 zugeordnet sein können. Diese sind bevorzugt nahe der Walze 6, vorgesehen und gewährleisten, dass ein Abstand der ersten Walze 6 der Rollbahn 5 zur letzten Walze 4 des Walzenglättwerkes 1 permanent eingestellt ist und bei sich ändernden Produktionsbedingungen, d. h. Änderung der Geschwindigkeit, Änderung der Dicke, Änderung der Austrittstemperatur des Materials etc. angepasst bzw. im Betrieb verfahren wird.

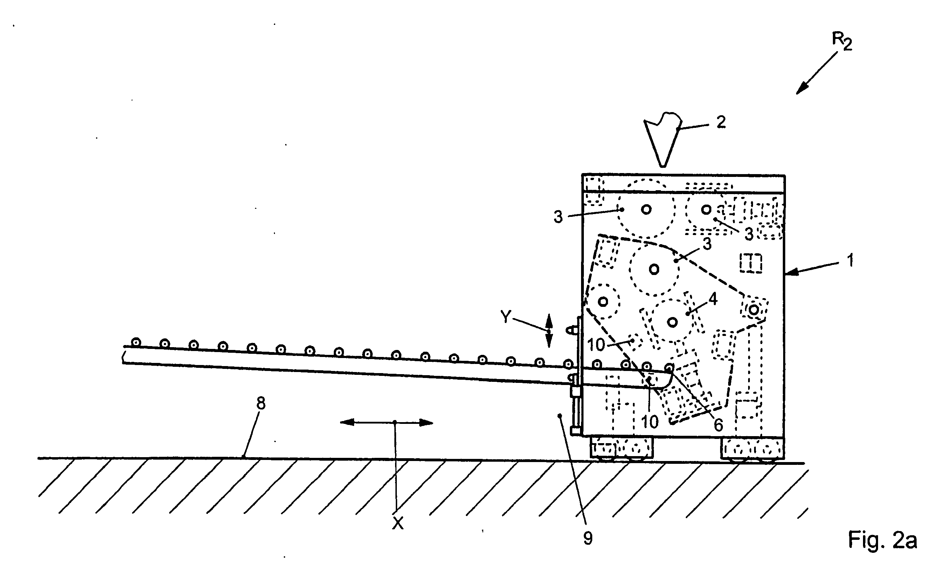

In einem weiteren Ausführungsbeispiel der vorliegenden Erfindung gemäss Figur 2a ist eine Vorrichtung R₂ aufgezeigt, die in etwa der eingangs genannten Art entspricht. Unterschiedlich ist hier, dass die Rollbahn 5, betreffend ihrer Verstellbarkeit in dargestellter Doppelpfeifrichtung y gegenüber dem Walzenglättwerk 1 direkt verfahrbar ist, wobei ein entsprechend ansteuerbares Antriebselement 9 die Verstellung der Rollbahn 5 in Doppelpfeilrichtung y direkt mit dem Walzenglättwerk 1 verbunden ist oder mit diesem in Verbindung steht.

Dabei kann die Rollbahn 5 dennoch in dargestellter Doppelpfeilrichtung x bewegt werden, wobei diese Bewegung gegenüber dem Walzenglättwerk 1 durch hier nicht näher dargestellte Antriebselemente 9 erfolgt. Dies soll ebenfalls im Rahmen der vorliegenden Erfindung liegen.

Wichtig ist bei der vorliegenden Erfindung auch, dass die Rollbahn 5, insbesondere deren erste Walze 6 auf die Position der letzten Walze 4 des Walzenglättwerkes 1 hinsichtlich Position, Abstand auch im Betrieb permanent angepasst werden kann.

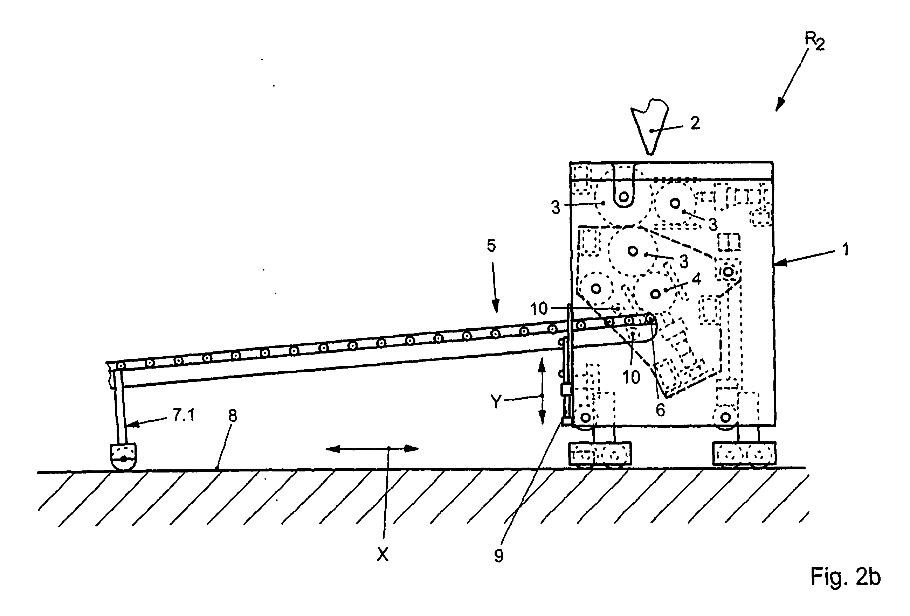

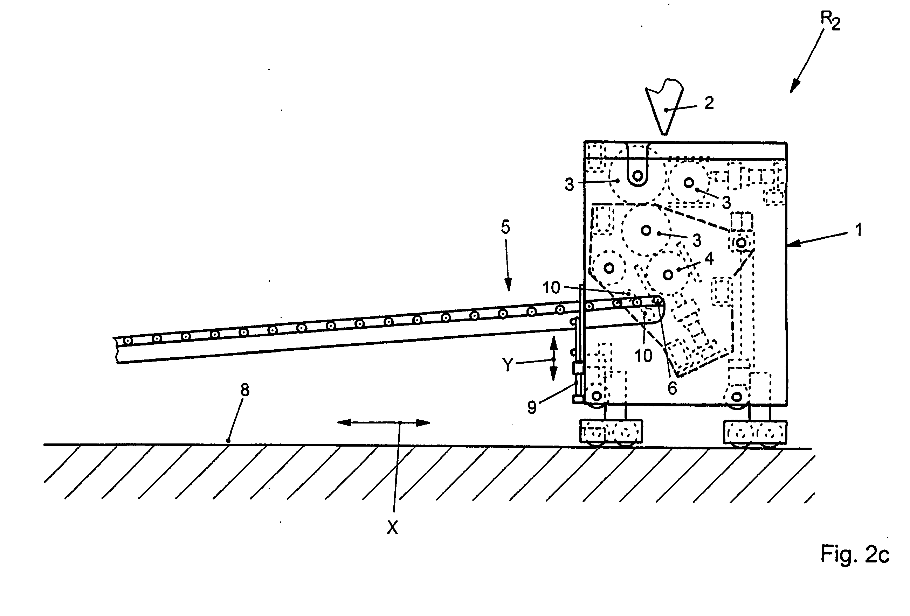

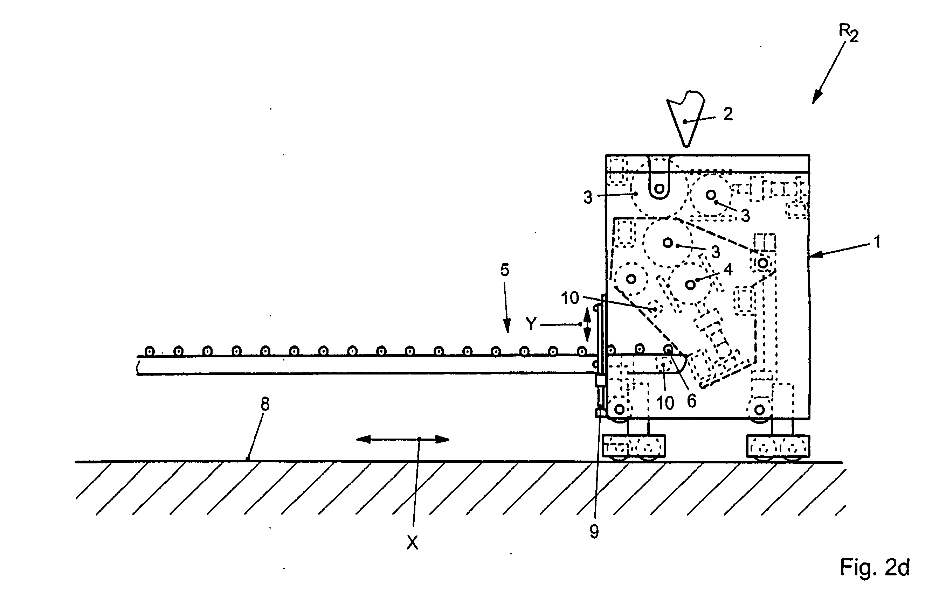

In den Figuren 2b und 2c sind zwei Betriebszustände, in Produktion aufgezeigt, in welchen die Walze 6 nahe der Walze 4 angeordnet ist und über entsprechende, hier nur angedeutete, Abstandmesseinrichtungen 10, welches Sensoren, Abstandssensoren od. dgl, sein können, ein Abstand, der ersten Walze 6 der Rollbahn 5 permanent zur letzten Walze 4 des Walzenglättwerkes 1 eingestellt, justiert oder angepasst werden kann. Auch ist, wie es insbesondere im Ausführungsbeispiel gemäss Figur 2d aufgezeigt ist, möglich, dass bspw. bei einem Crash, oder zu Wartungszwecken sehr schnell mit einer sehr hohen Geschwindigkeit die Rollbahn 5 gegenüber der letzten Walze 4 des Walzenglättwerkes 1 in einen Untergrund 8 abgesenkt wird. Dies soll ebenfalls im Rahmen der vorliegenden Erfindung liegen.

Auch hier ist völlig unerheblich, ob das Walzenglättwerk 1 als Zweiwalzen-, Dreiwalzen- oder Mehrwalzenglättwerk ausgebildet ist, wobei sich die letzte Walze 4 in der Position, je nach Betriebszuständen, d. h. Anfahrzustand, Betriebszustand oder Wartungszustand sich ändern kann.

Wichtig ist ferner bei der vorliegenden Erfindung, dass jederzeit die Position der ersten Walze 6 der Rollbahn 5 auch im Betrieb ermittelt wird, wobei hier unterschiedliche Wegmesssysteme, Positionsmesssysteme Anwendung finden können. Auf Grund dieser Position lässt sich die erste Walze 6 der Rollbahn 5 sehr exakt und genau in einem gewünschten Abstand zur letzten Walze 4 des Walzenglättwerkes 1, auch bei sich ändernder Position dieser letzten Walze 4 des Walzenglättwerkes 1 einstellen und permanent in gewünschtem Abstand mitfahren.

Wichtig ist ferner, dass sehr genau die Rollbahn 5 und insbesondere die erste Walze 6 der Rollbahn 5 in einer x- und/oder y-Richtung ansteuerbar, auch in Abhängigkeit der Position der letzten Walze 4 des Walzenglättwerkes 1 verfahrbar ist. Hierzu wird vorzugsweise permanent der Abstand der letzten Walze 4 des Walzenglättwerkes 1 zur ersten Walze 6 der Rollbahn 5 ermittelt, gemessen und im Betrieb, sollte dies erforderlich sein, nachgeregelt.

Es hat sich ferner als besonders vorteilhaft erwiesen, dass die Rollbahn 5 gegenüber einem Untergrund 8 absenkbar ist, um bspw. Wartungs- oder Reparaturarbeiten sowie eine Austauschen von Walzen 3, 4 des Walzenglättwerkes 1 zu ermöglichen.

Auch kann ein sehr schnelles Absenken der Rollbahn 5 von Nutzen sein, um bspw. bei Crash einen Abstand der letzten Walze 4 des Walzenglättwerkes 1 und der ersten Walze 6 der Rollbahn 5 mit hoher und grosser Geschwindigkeit zu vergrössern.

Zudem hat sich als vorteilhaft bei der vorliegenden Erfindung erwiesen, dass durch das Verfahren, insbesondere die Verfahrbarkeit der ersten Walze 6 der Rollbahn 5 sich ein automatisches Ablösen und Übergeben der aus der Kunststoffschmelze hergestellten Platte auf die Rollbahn 5 wesentlich erleichtert, da die erste Walze 6 exakt über einem Ablösepunkt der letzten Walze 4 des Walzenglättwerkes 1 verfahrbar ist.

### Positionszahlenliste

| | | | | | |
|---|---|---|---|---|---|
| 1 | Walzenglättwerk | 34 | | 67 | |
| 2 | Breitschlitzdüse | 35 | | 68 | |
| 3 | Walzen | 36 | | 69 | |
| 4 | Walze | 37 | | 70 | |
| 5 | Rollbahn | 38 | | 71 | |
| 6 | Walze | 39 | | 72 | |
| 7 | Gestell | 40 | | 73 | |
| 8 | Untergrund | 41 | | 74 | |
| 9 | Antriebselement | 42 | | 75 | |
| 10 | Abstandsmesseinrichtung | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | R₁ | Vorrichtung |
| 19 | | 52 | | R₂ | Vorrichtung |
| 20 | | 53 | | | |
| 21 | | 54 | | | |
| 22 | | 55 | | x | Richtung |
| 23 | | 56 | | y | Richtung |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben eines Walzenglättwerkes (1) für Kunststoffschmelzen mit einer nachgeschalteten Rollbahn (5),
**dadurch gekennzeichnet,**
**dass** eine Position der Rollbahn (5) auf eine Position einer Walze (4) des Walzenglättwerkes (1) ausgerichtet wird, wobei ein Abstand in einer x- und/oder y-Richtung einer ersten Walze (6) der Rollbahn (5) auf die Position der letzten Walze (4) des Walzenglättwerkes (1) automatisch und im Betrieb anpassbar, justierbar und veränderbar ist.

2. Verfahren nach Anspruch 1, **dadurch gekennzeichnet, dass** eine Position der erste Walze (6) der Rollbahn (5) auf eine Position einer letzten Walze (4) des Walzenglättwerkes (1) eingestellt wird.

3. Verfahren nach Anspruch 1 oder 2, **dadurch gekennzeichnet, dass** durch Verfahren der Rollbahn (5) in einer x- und/oder y-Richtung die Rollbahn (5), insbesondere die erste Walze (6) der Rollbahn (5) nahe an eine Position einer letzten Walze (4) des Walzenglättwerkes (1) automatisiert verfahren wird.

4. Verfahren nach wenigstens einem der Ansprüche 1 bis, 3, **dadurch gekennzeichnet, dass** die Rollbahn (5) automatisch über entsprechende Antriebselemente (9) und Antriebsmittel, insbesondere die erste Walze (6) der Rollbahn (5) auf die letzte Walze (4) des Walzenglättwerkes (1) ausrichtet und im Betrieb ausgerichtet wird.

5. Verfahren nach wenigstens einem der Ansprüche 1 bis 4, **dadurch gekennzeichnet, dass** die exakte Positionen der ersten Walze (6) der Rollbahn (5) sowie der letzten Walze (4) des Walzenglättwerkes (1) erfasst werden und hierüber eine exakte Steuerung und Bewegung der ersten Walze (6) der Rollbahn (5) durch Bewegung in x- und/oder y-Richtung in Abhängigkeit der Bewegung der letzten Walze (4) des Walzenglättwerkes (1) ermöglicht wird.

6. Verfahren nach wenigstens einem der Ansprüche 1 bis 5, **dadurch gekennzeichnet, dass** in Abhängigkeit der Position der letzten Walze (4) des Walzenglättwerkes (1) die erste Walze (6) der Rollbahn (5) auf die Position der letzten Walze (4) des Walzenglättwerkes (1), auch permanent im Betrieb angepasst wird.

7. Verfahren nach wenigstens einem der Ansprüche 1 bis 6, **dadurch gekennzeichnet, dass** permanent der Abstand der ersten Walze (6) der Rollbahn (5) im Betrieb der letzten Walze (4) des Walzenglättwerkes (1) ermittelt wird und ggf. ein differierender Abstand durch Bewegen der Rollbahn (5) in x- und/oder y-Richtung betreffend ihre gewünschte Lage zum Walzenglättwerk (1) verfahren wird.

8. Verfahren nach wenigstens einem der Ansprüche 1 bis 7, **dadurch gekennzeichnet, dass** zur Gewährleistung einer Notöffnung zwischen der letzten Walze (4) des Walzenglättwerkes (1) und der Rollbahn (5), die Rollbahn (5) mit einer grösseren Öffnungsgeschwindigkeit von der letzten Walze (4) des Walzenglättwerkes (1) wegbewegt wird, als die Öffnungsgeschwindigkeit der Walze (4) des Walzenglättwerkes (1) sich gegen die Rollbahn (5) bewegt.

9. Vorrichtung zum Betreiben eines Walzenglättwerkes (1) für Kunststoffschmelzen mit einer nachgeschalteten Rollbahn (5), **dadurch gekennzeichnet, dass** die Rollbahn (5) auf eine Position einer Walze (4) des Walzenglättwerkes (1) verfahrbar ist, wobei eine erste Walze (6) der Rollbahn (5) durch Verfahren in x- und oder y-Richtung zur letzten Walze (4) des Walzenglättwerkes (1), automatisch und im Betrieb exakt positionierbar ist.

10. Vorrichtung nach Anspruch 9, **dadurch gekennzeichnet, dass** die Rollbahn (5) einer x- und/oder y-Richtung gegenüber dem Walzenglättwerk (1), insbesondere gegenüber einer letzten Walze (4) des Walzenglättwerkes (1) verfahrbar ist.

11. Vorrichtung nach Anspruch 9 oder 10, **dadurch gekennzeichnet, dass** die Rollbahn (5) ein Gestell (7.1, 7.2) aufweist, welchem zumindest ein Antriebselement (9) vorgesehen ist, um die Rollbahn (5) in einer x- und/oder y-Richtung steuerbar aktiv zu verfahren.

12. Vorrichtung nach einem der Ansprüche 9 bis 11, **dadurch gekennzeichnet, dass** der Rollbahn (5) ein Wegmesssystem zugeordnet ist, um eine exakte Lage der Rollbahn (5), insbesondere einer ersten Walze (6) der Rollbahn (5) exakt im Betrieb permanent zu ermitteln.

13. Vorrichtung nach wenigstens einem der Ansprüche 9 bis 12, **dadurch gekennzeichnet, dass** im Bereich der ersten Walze (6) der Rollbahn (5) und/oder im Bereich der letzten Walze (4) des Walzenglättwerkes (1) zumindest eine Abstandsmesseinrichtung (10), insbesondere einen Abstandssensor vorgesehen ist, um permanent im Betrieb einen Abstand zwischen der letzten Walze (4) des Walzenglättwerkes (1) und der ersten Walze (6) der Rollbahn (5) zu ermitteln, abzugleichen oder zu verändern.

14. Vorrichtung nach wenigstens einem der Ansprüche 11 bis 13, **dadurch gekennzeichnet, dass** die Rollbahn (5) gegenüber dem Gestell (7.1, 7.2) in einer y-Richtung mittels Antriebselementen (9), Zylindern, Spindel od. dgl. steuerbar hin- und her verfahrbar ist.

15. Vorrichtung nach wenigstens einem der Ansprüche 11 bis 14, **dadurch gekennzeichnet, dass** die Rollbahn (5) gegenüber dem Walzenglättwerk (1) in x-Richtung aktiv angetrieben hin und her verfahrbar ist oder die Rollbahn (5) innerhalb des Gestelles (7.1, 7.2) in x-Richtung mittels eines Antriebes hin und her verfahrbar ist.

16. Vorrichtung nach wenigstens einem der Ansprüche 9 bis 15, **dadurch gekennzeichnet, dass** permanent im Betrieb ein Abstand zu der ersten Walze (6) der Rollbahn (5) zur letzten Walze (4) des Walzenlättwerkes (1) gemessen und durch Verfahren der Rollbahn (5) abgleichbar ist.

## Claims

1. Method of operating a roll polishing mill (1) for polymer melts with a downstream roller conveyor (5),
**characterized in**
**that** a position of the roller conveyor (5) is aligned with a position of a roller (4) of the roll polishing mill (1), wherein a distance in an x- and/or y-direction of a first roller (6) of the roller conveyor (5) is automatically and during operation adaptable to the position of the last roller (4) of the roll polishing mill (1), adjustable and variable.

2. Method according to claim 1, **characterized in that** a position of the first roller (6) of the roller conveyor (5) is set to a position of a last roller (4) of the roll polishing mill (1).

3. Method according to claim 1 or 2, **characterized in that** by displacement of the roller conveyor (5) in an x-and/or y-direction the roller conveyor (5), in particular the first roller (6) of the roller conveyor (5) is displaced in an automated manner to a point close to a position of a last roller (4) of the roll polishing mill (1).

4. Method according to at least one of claims 1 to 3, **characterized in that** the roller conveyor (5) automatically by means of suitable drive elements (9) and driving means aligns in particular the first roller (6) of the roller conveyor (5) with the last roller (4) of the roll polishing mill (1) and is aligned during operation.

5. Method according to at least one of claims 1 to 4, **characterized in that** the exact positions of the first roller (6) of the roller conveyor (5) and of the last roller (4) of the roll polishing mill (1) are detected and allow an exact control and movement of the first roller (6) of the roller conveyor (5) by movement in x-and/or y-direction in dependence upon the movement of the last roller (4) of the roll polishing mill (1).

6. Method according to at least one of claims 1 to 5, **characterized in that** in dependence upon the position of the last roller (4) of the roll polishing mill (1) the first roller (6) of the roller conveyor (5) is adapted to the position of the last roller (4) of the roll polishing mill (1), also continuously during operation.

7. Method according to at least one of claims 1 to 6, **characterized in that** the distance of the first roller (6) of the roller conveyor (5) is continuously determined during operation of the last roller (4) of the roll polishing mill (1) and optionally a differing distance is travelled by moving the roller conveyor (5) in x- and/or y-direction regarding the desired position thereof relative to the roll polishing mill (1).

8. Method according to at least one of claims 1 to 7, **characterized in that** to guarantee an emergency opening between the last roller (4) of the roll polishing mill (1) and the roller conveyor (5), the roller conveyor (5) is moved away from the last roller (4) of the roll polishing mill (1) at a higher opening speed than the opening speed of the roller (4) of the roll polishing mill (1) moves towards the roller conveyor (5) [sic].

9. Device for operating a roll polishing mill (1) for polymer melts with a downstream roller conveyor (5), **characterized in that** the roller conveyor (5) is displaceable to a position of a roller (4) of the roll polishing mill (1), wherein a first roller (6) of the roller conveyor (5) through displacement in x- and/or y-direction is automatically and during operation exactly positionable relative to the last roller (4) of the roll polishing mill (1).

10. Device according to claim 9, **characterized in that** the roller conveyor (5) is displaceable [sic] an x- and/or y-direction relative to the roll polishing mill (1), in particular relative to a last roller (4) of the roll polishing mill (1).

11. Device according to claim 9 or 10, **characterized in that** the roller conveyor (5) comprises a frame (7.1, 7.2), on(?) which at least one drive element (9) is provided for controllably actively displacing the roller conveyor (5) in an x- and/or y-direction.

12. Device according to one of claims 9 to 11, **characterized in that** associated with the roller conveyor (5) is a position measuring system in order to determine exactly and continuously during operation an exact position of the roller conveyor (5), in particular of a first roller (6) of the roller conveyor (5).

13. Device according to at least one of claims 9 to 12, **characterized in that** in the region of the first roller (6) of the roller conveyor (5) and/or in the region of the last roller (4) of the roll polishing mill (1) at least one distance measuring device (10), in particular a distance sensor, is provided for determining, adjusting or varying a distance between the last roller (4) of the roll polishing mill (1) and the first roller (6) of the roller conveyor continuously during operation.

14. Device according to at least one of claims 11 to 13, **characterized in that** the roller conveyor (5) is controllably displaceable to and fro relative to the frame (7.1, 7.2) in a y-direction by means of drive elements (9), cylinders, spindles or the like.

15. Device according to at least one of claims 11 to 14, **characterized in that** the roller conveyor (5) is displaceable to and fro relative to the roll polishing mill (1) in x-direction in an actively driven manner or the roller conveyor (5) is displaceable to and fro inside the frame (7.1, 7.2) in x-direction by means of a drive.

16. Device according to at least one of claims 9 to 15, **characterized in that** continuously during operation a distance relative to the first roller (6) of the roller conveyor (5) relative to the last roller (4) of the roll polishing mill (1) is measured and adjustable through displacement of the roller conveyor (5).

## Revendications

1. Procédé pour faire fonctionner une machine de polissage à cylindres (1) pour des plastiques en fusion avec un chemin de roulement (5) connecté en aval,
**caractérisé par le fait**
**qu'**une position du chemin de roulement (5) est alignée sur une position d'un cylindre (4) de la machine de polissage à cylindres (1), une distance dans une direction x et/ou y d'un premier cylindre (6) du chemin de roulement (5) pouvant être adaptée à, ajustée et modifiée automatiquement et en fonctionnement en fonction de la position du dernier cylindre (4) de la machine de polissage à cylindres (1).

2. Procédé selon la revendication 1, **caractérisé par le fait qu'**une position du premier cylindre (6) du chemin de roulement (5) est réglée à une position d'un dernier cylindre (4) de la machine de polissage à cylindres (1).

3. Procédé selon la revendication 1 ou 2, **caractérisé par le fait que**, par le déplacement du chemin de roulement (5) dans une direction x et/ou y, le chemin de roulement (5), en particulier le premier cylindre (6) du chemin de roulement (5), est déplacé de manière automatisée à proximité d'une position d'un dernier cylindre (4) de la machine de polissage à cylindres (1).

4. Procédé selon au moins l'une des revendications 1 à 3, **caractérisé par le fait que** le chemin de roulement (5) aligne automatiquement, par l'intermédiaire d'éléments d'entraînement (9) et de moyens d'entraînement correspondants, en particulier le premier cylindre (6) du chemin de roulement (5) sur le dernier cylindre (4) de la machine de polissage à cylindres (1) et est aligné en fonctionnement.

5. Procédé selon au moins l'une des revendications 1 à 4, **caractérisé par le fait que** sont détectées les positions exactes du premier cylindre (6) du chemin de roulement (5) ainsi que du dernier cylindre (4) de la machine de polissage à cylindres (1) et qu'il est ainsi autorisé un commande et un déplacement exacts du premier cylindre (6) du chemin de roulement (5) par le déplacement dans la direction x et/ou y en fonction du déplacement du dernier cylindre (4) de la machine de polissage à cylindres (1).

6. Procédé selon au moins l'une des revendications 1 à 5, **caractérisé par le fait que**, en fonction de la position du dernier cylindre (4) de la machine de polissage à cylindres (1), le premier cylindre (6) du chemin de roulement (5) est adapté à la position du dernier cylindre (4) de la machine de polissage à cylindres (1), également en permanence en fonctionnement.

7. Procédé selon au moins l'une des revendications 1 à 6, **caractérisé par le fait que** la distance du premier cylindre (6) du chemin de roulement (5) est déterminée en permanence pendant le fonctionnement du dernier cylindre (4) de la machine de polissage à cylindres (1) et qu'il est éventuellement déplacé d'une distance différente par le déplacement du chemin de roulement (5) dans la direction x et/ou y en ce qui concerne sa position désirée par rapport à la machine de polissage à cylindres (1).

8. Procédé selon au moins l'une des revendications 1 à 7, **caractérisé par le fait que**, pour assurer une ouverture de secours entre le dernier cylindre (4) de la machine de polissage à cylindres (1) et le chemin de roulement (5), le chemin de roulement (5) est éloigné du dernier cylindre (4) de la machine de polissage à cylindres (1) à une vitesse d'ouverture supérieure à la vitesse d'ouverture à laquelle le cylindre (4) de la machine de polissage à cylindres (1) se déplace contre le chemin de roulement (5).

9. Dispositif pour faire fonctionner une machine de polissage à cylindres (1) pour des plastiques en fusion avec un chemin de roulement (5) connecté en aval, **caractérisé par le fait que** le chemin de roulement (5) peut être déplacé à une position d'un cylindre (4) de la machine de polissage à cylindres (1), un premier cylindre (6) du chemin de roulement (5) pouvant, par déplacement dans une direction x et/ou y, être positionné exactement, automatiquement et en fonctionnement, par rapport à un dernier cylindre (4) de la machine de polissage à cylindres (1).

10. Dispositif selon la revendication 9, **caractérisé par le fait que** le chemin de roulement (5) peut être déplacé dans une direction x et/ou y par rapport à la machine de polissage à cylindres (1), en particulier par rapport à un dernier cylindre (4) de la machine de polissage à cylindres (1).

11. Dispositif selon la revendication 9 ou 10, **caractérisé par le fait que** le chemin de roulement (5) présente un bâti (7.1, 7.2) auquel est prévu au moins un élément d'entraînement (9) pour déplacer le chemin de roulement (5) activement de manière commandée dans une direction x et/ou y.

12. Dispositif selon l'une des revendications 9 à 11, **caractérisé par le fait qu'**au chemin de roulement (5) est associé un système de mesure de trajet, pour déterminer en permanence, de manière exacte pendant le fonctionnement, une position exacte du chemin de roulement (5), en particulier d'un premier cylindre (6) du chemin de roulement (5).

13. Dispositif selon au moins l'une des revendications 9 à 12, **caractérisé par le fait qu'**à l'endroit du premier cylindre (6) du chemin de roulement (5) et/ou à l'endroit du dernier cylindre (4) de la machine de polissage à cylindres (1) est prévu au moins un dispositif de mesure de distance (10), en particulier un capteur de distance, pour déterminer, compenser ou modifier en permanence en fonctionnement une distance entre le dernier cyclindre (4) de la machine de polissage à cylindres (1) et le premier cylindre (6) du chemin de roulement (5).

14. Dispositif selon au moins l'une des revendications 9 à 13, **caractérisé par le fait que** le chemin de roulement (5) peut être déplacé en va-et-vient, de manière commandée, par rapport au bâti (7.1, 7,2) dans une direction y, au moyen d'éléments d'entraînement (9), de cylindres, d'axes ou autres.

15. Dispositif selon au moins l'une des revendications 9 à 14, **caractérisé par le fait que** le chemin de roulement (5) peut être déplacé en va-et-vient, de manière entraînée activement, dans la direction x par rapport à la machine de polissage à cylindres (1) ou que le chemin de roulement (5) peut être déplacé en va-et-vient dans la direction x dans le bâti (7.1, 7.2) au moyen d'un entraînement.

16. Dispositif selon au moins l'une des revendications 9 à 15, **caractérisé par le fait qu'**une distance entre le premier cylindre (6) du chemin de roulement (5) et le dernier cylindre (4) la machine de polissage à cylindres (1) est mesurée en permanence en fonctionnement et peut être compensée par déplacement du chemin de roulement (5).
